(19) Europäisches Patentamt

European Patent Office

Office européen des brevets

(11) **EP 0 708 181 B1**

(12) **EUROPÄISCHE PATENTSCHRIFT**

(45) Veröffentlichungstag und Bekanntmachung des Hinweises auf die Patenterteilung:
**17.01.2001 Patentblatt 2001/03**

(51) Int Cl.[7]: **C13D 3/06**, B01F 7/04

(21) Anmeldenummer: **95115942.5**

(22) Anmeldetag: **10.10.1995**

(54) **Verfahren zur Behandlung von zur Staubentwicklung neigenden Schüttgütern**

Process for the treatment of bulk materials which have a tendency to emit dust

Procédé de traitement de matières en vrac ayant tendance à émettre de la poussière

(84) Benannte Vertragsstaaten:
**CH DE ES FR GB IT LI**

(30) Priorität: **17.10.1994 DE 4437072**

(43) Veröffentlichungstag der Anmeldung:
**24.04.1996 Patentblatt 1996/17**

(73) Patentinhaber: **Gebrüder Lödige Maschinenbaugesellschaft mbH**
**D-33102 Paderborn (DE)**

(72) Erfinder: **Zellerhoff, Franz-Joseph**
**D-33100 Paderborn (DE)**

(74) Vertreter: **KOHLER SCHMID + PARTNER**
**Patentanwälte**
**Ruppmannstrasse 27**
**70565 Stuttgart (DE)**

(56) Entgegenhaltungen:
**EP-A- 0 043 470     WO-A-90/12640**
**DE-A- 3 037 333**

- **AUFBEREITUNGSTECHNIK, Bd.23, Nr.1, Januar 1982, WIESBADEN Seite 42-49 G.TEWES ET AL 'Klärschlamm-Nachbehandlung mit kontinuierlichen Pflugscharmischern'**
- **PATENT ABSTRACTS OF JAPAN vol. 13, no. 479 (C-648) (3827) 30. Oktober 1989 & JP-A-01 189 341 (OSAKA TITANIUM) 28. Juli 1989**

**Beschreibung**

Die Erfindung betrifft ein Verfahren zur Behandlung von zur Staubentwicklung neigenden Schüttgütern, deren einzelne Schüttgutpartikel im Innern feuchtigkeitsbeladen sind und eine trockene Oberfläche aufweisen.

Ein derartiges Verfahren ist durch die DE 39 13 384 A1 bekanntgeworden.

Bei unterschiedlichsten Herstellungs- und Verarbeitungsprozessen fallen Schüttgüter als Rest- und/oder Abfallprodukte an, die einen Trockensubstanzanteil von ca. 70 % aufweisen.

Bei der Rohzuckergewinnung entsteht beispielsweise bei der Verarbeitung der Zuckerrüben in Zuckerfabriken ein Carbonatationsrestprodukt mit einem solchen Feuchtigkeitsanteil, einem Anteil von Calziumcarbonat von ca. 65 %, einem Phosphoroxidanteil von 1-2 % und einem Stickstoffanteil von weniger als 1 %. -

Die bekannten Schüttgüter weisen in der Regel nach einer Verkleinerung eine granulatförmige, körnige bis sandige Struktur auf. Im Innern der Schüttgutpartikel befinden sich (Adsorptions-) hohlräume, die unterschiedlich groß sein können. In diesen Hohlräumen, die über Porenöffnungen bzw. Kanäle für Gase oder Flüssigkeiten zugänglich sein können, kann Flüssigkeit aufgenommen und gebunden werden. Die Hohlräume wirken als Speicherräume für Flüssigkeit, so daß die Oberfläche der Schüttgutpartikel trocken ist und zur Staubentwicklung neigt.

Um die anfallenden Schüttgüter weiterverarbeiten und/oder recyceln zu können, müssen sie in der Regel transportiert werden. Der Transport kann bereits innerhalb des Produktionsablaufes in den Fabriken, beispielsweise durch Fließbänder oder Förderschnecken, oder später durch einen Transport in Containern und/oder auf Lkw-Ladeflächen, notwendig werden.

Nachteiligerweise kommt es beim Verladen und beim Transport der Schüttgüter durch die Neigung zur Staubentwicklung der Schüttgutpartikel dazu, daß die Oberflächen von Vorrichtungen, Maschinen, Gegenständen usw., die sich in der Nähe des Verladeortes befinden, mit Schüttgutstaub bedeckt werden. Davon sind beispielsweise Anwohner in der Nähe der oben genannten Zuckerfabriken in besonderem Maße betroffen.

Der Neigung zur Staubentwicklung kann bisher nur mit einer zusätzlichen externen Befeuchtung durch eine Besprühung des Schüttgutes mit einem flüssigen Medium entgegengetreten werden, wie dies beispielsweise durch das aus der DE 39 13 384 A1 bekannte Verfahren möglich ist.

Zur Befeuchtung der einzelnen Schüttgutpartikel ist bei einer Mischvorrichtung nach der Lehre der DE 13 384 A1 eine zusätzliche Düse zum Besprühen der Schüttgutpartikel vorgesehen.

Die Besprühung des Schüttgutes führt nachteiligerweise zunächst nur zu einer Befeuchtung der oberen Lagen des Schüttgutes, so daß eine zusätzliche Durchmischung des Schüttgutes notwendig wird. Die Durchmischung des Schüttgutes erfordert weitere zusätzliche Energie, so daß diese Art der Schüttgutbehandlung aufwendig und teuer ist. Weiterhin nachteilig ist, daß diese Art der Schüttgutbehandlung nicht überall möglich ist.

Der vorliegenden Erfindung liegt daher die Aufgabe zugrunde, die Neigung zur Staubentwicklung des Schüttgutes zu reduzieren bzw. ganz zu unterdrücken, wobei auf eine zusätzliche externe Befeuchtung des Schüttgutes verzichtet werden kann.

Die Aufgabe der vorliegenden Erfindung wird erfindungsgemäß dadurch gelöst, daß eine mechanische Behandlung der Schüttgüter in einer chargenweise und/oder kontinuierlich arbeitenden Mischvorrichtung vorgesehen ist, bis 0,1 bis 5 % der in den Schüttgutpartikeln gebunden gespeicherten Flüssigkeit an die Oberfläche der einzelnen Schüttgutpartikel abgegeben wird.

Durch die mechanische Behandlung, z. B. beim Mischvorgang, wird dem Schüttgut ausreichend Energie zugeführt, um die Feuchtigkeit aus dem Innern der Hohlräume der Schüttgutpartikel nach außen an die Oberfläche der Schüttgutpartikel zu treiben. Es ist vorteilhafterweise kein Einsatz weiterer Energie in Form von Wärme oder einer zusätzlichen Flüssigkeit notwendig, um die Schüttgüter zu befeuchten. Daher wird sowohl Energie als auch der Rohstoff, der als Flüssigkeit zur Verfügung steht, eingespart.

Ein weiterer Vorteil des erfindungsgemäßen Verfahrens ist, daß durch den Flüssigkeitsaustritt aus dem Schüttgutpartikelinnern an die Schüttgutpartikeloberfläche eine äußerst gezielte Benetzung des Schüttgutes gewährleistet ist. Bei den bekannten Verfahren wird meist der gesamte Schüttgutcontainer einschließlich Containerwände und Teile der Umgebung befeuchtet, so daß wesentlich mehr Flüssigkeit verbraucht wird als eigentlich zur Benetzung des Schüttgutes zur Vermeidung von Staubbildung notwendig ist.

Wenn die Schüttgüter während einer Verweilzeit von einer halben Minute bis zehn Minuten mechanisch behandelt werden, läßt sich bereits eine ausreichende Befeuchtung oder Benetzung des Schüttgutes erreichen. Aufgrund der vorteilhaften kurzen Verweilzeit läßt sich das erfindungsgemäße Verfahren in viele Prozeßabläufe integrieren.

Bei dem erfindungsgemäßen Verfahren kann eine bekannte Maschine als Mischvorrichtung verwendet werden, die sich zum einen durch eine gute Mischgenauigkeit in kurzen Verweilzeiten auszeichnet und bei der große Durchsatzleistungen bei kleinen Maschinenabmessungen möglich sind. Zur Anwendung des Verfahrens ist auch der Einsatz anderer Aufbereitungsvorrichtungen denkbar, in denen eine mechanische Behandlung der Schüttgutpartikel durchführbar ist.

Bei einer besonders bevorzugten Ausführungsform des erfindungsgemäßen Verfahrens ist das Schüttgut ein bei der Rohzuckerherstellung entstehendes Carbonatationsrestprodukt.

Bei der Verarbeitung von Zuckerrüben im Diffusionsverfahren wird zunächst ein Rohsaft gewonnen, der noch mit Kalk oder Kalkmilch weiterbehandelt werden muß. Dabei entsteht Zuckerkalk als unerwünschtes Nebenprodukt, das durch Zugabe von $CO_2$ (Carbonatation) wiederum in Zucker und Calciumkarbonat getrennt wird. Bei diesem Trennverfahren entsteht ein unlöslicher Rückstand, das Carbonatationsrestprodukt. Das Carbonatationsrestprodukt wird vorzugsweise als Bodenverbesserer (Dünger) von den Zuckerrübenanbauern eingesetzt. Daher muß das Carbonatationsrestprodukt von der Zuckerfabrik zu den Bauernhöfen transportiert werden. Dadurch, daß das Carbonatationsrestprodukt vor dem Transport mit dem erfindungsgemäßen Verfahren behandelt wird, wird eine Staubbildung vermieden. Folglich wird die beim Verladevorgang entstehende Staubbelästigung der Anwohner in der Nähe der Zuckerfabrik beseitigt und in der Zuckerfabrik selbst kann das Produkt einfacher und für das Personal sicherer gehandhabt werden.

Bei einer anderen Ausführungsform des erfindungsgemäßen Verfahrens ist die mechanische Behandlung der Carbonatationsrestprodukte einem Filtrierungsprozeß durch mindestens eine Membran und/oder Kammerfilterpresse nachgeschaltet.

Dies hat den weiteren Vorteil, daß das erfindungsgemäße Verfahren in den Prozeß der Zuckergewinnung integriert werden kann. Das erfindungsgemäße Verfahren kann auf diese Weise dem Carbonatationsprozeß direkt nachgeschaltet werden, so daß das Carbonatationsrestprodukt die Zuckerfabrik bereits befeuchtet verläßt und es somit nicht zu einer Staubbildung beim Verladevorgang kommen kann.

Bevorzugt ist, daß die Mischvorrichtung für das erfindungsgemäße Verfahren mit Pflugscharschaufeln ausgerüstet ist und in einem Froudezahlbereich zwischen Fr = 1 und Fr = 9 betrieben werden kann.

Die auf einer Welle angebrachten Pflugscharschaufeln rotieren in einem Froudezahlbereich von 1 bis 9, wobei die Froudezahl aus dem Quotienten der Drehzahl n und der kritischen Drehzahl $n_c$ gebildet ist.

$$Fr = (n/n_c)^2$$

In diesem Drehzahlbereich wird das in die Maschine einströmende Produkt über die Mischwerkzeuge Zentrifugalkräften unterworfen, die das Produkt im Haufwerk und/oder im mechanisch erzeugten Wirbelbett und/oder an die Behälterinnenwand drückend, bearbeiten. Das Produkt durchläuft die Maschine. Dabei finden in bekannter Weise Vermischungsprozesse statt. Bei einer weiteren bevorzugten Weiterbildung der Mischvorrichtung für das erfindungsgemäße Verfahren ist die Mischvorrichtung mit hochtourig im Bereich von n ≥ 1500 min$^{-1}$ betreibbaren Messerköpfen ausgestattet.

Dies hat den entscheidenden Vorteil, daß durch den Mischprozeß die Feuchtigkeit aus dem Schüttgutpartikelinneren besonders effektiv und schnell an die Oberfläche der Schüttgutpartikel getrieben werden kann.

Durch ein Verfahren werden Schüttgüter, die zur Staubentwicklung neigen, in einer chargenweise und/oder kontinuierlich arbeitenden Mischvorrichtung mechanisch behandelt. Einzelne Schüttgutpartikel der Schüttgüter sind im Innern feuchtigkeitsbeladen und weisen eine trockene Oberfläche auf. Die mechanische Behandlung der Schüttgüter wird durchgeführt, bis 0,1 bis 5 % der in den Schüttgutpartikeln gebunden gespeicherten Flüssigkeit an die Oberfläche der einzelnen Schüttgutpartikel abgegeben wird. Daher wird die Neigung des Schüttgutes zur Staubentwicklung reduziert bzw. ganz unterdrückt. Auf eine zusätzliche externe Befeuchtung des Schüttgutes kann dabei verzichtet werden.

**Patentansprüche**

1. Verfahren zur Behandlung von zur Staubentwicklung neigenden Schüttgütern, deren einzelne Schüttgutpartikel im Innern feuchtigkeitsbeladen sind und eine trockene Oberfläche aufweisen, **dadurch gekennzeichnet**, daß eine mechanische Behandlung der Schüttgüter in einer chargenweise und/oder kontinuierlich arbeitenden Mischvorrichtung vorgesehen ist, bis 0,1 bis 5 % der in den Schüttgutpartikeln gebunden gespeicherten Flüssigkeit an die Oberfläche der einzelnen Schüttgutpartikel abgegeben wird.

2. Verfahren nach Anspruch 1, **dadurch gekennzeichnet**, daß die Schüttgüter während einer Verweilzeit von einer Minute bis zehn Minuten mechanisch behandelt werden.

3. Verfahren nach Anspruch 1 oder 2, **dadurch gekennzeichnet**, daß das Schüttgut ein bei der Rohzuckerherstellung entstehendes Carbonatationsrestprodukt ist.

4. Verfahren nach Anspruch 3, **dadurch gekennzeichnet**, daß die mechanische Behandlung der Carbonatationsrestprodukte einem Filtrierungsprozeß durch mindestens eine Membran- und/oder Kammerfilterpresse nachgeschaltet ist.

**Claims**

1. Method for the treatment of bulk materials with a tendency to develop dust, the individual bulk material particles of which are laden with moisture in the interior and exhibit a dry surface, **characterised in that** a mechanical treatment of the bulk materials is provided in a mixing apparatus operating discontinuously and/or continuously, until 0.1 to 5% of the stored moisture retained in the bulk material particles is released to the surface of the individual bulk material particles.

2. Method according to claim 1, **characterised in that** the bulk materials are mechanically treated during a duration of stay of one to ten minutes.

3. Method according to any of the claims 1 or 2, **characterised in that** the bulk material is a carbonation residue resulting from the production of raw sugar.

4. Method according to claim 3, **characterised in that** the mechanical treatment of the carbonation residue is downstream from a filter process by at least a membrane and/or a chamber filter-press.

**Revendications**

1. Procédé pour traiter des matériaux en vrac qui ont tendance à dégager de la poussière et dont les particules individuelles sont chargées intérieurement d'humidité et possèdent une surface sèche, caractérisé en ce qu'un traitement mécanique des matériaux en vrac est prévu dans un dispositif mélangeur travaillant d'une manière discontinue et/ou continue, jusqu'à ce que 0,1 à 5 % du liquide retenue à l'état lié dans les particules des matériaux en vrac soient délivrés à la surface des différentes particules des matériaux en vrac.

2. Procédé selon la revendication 1, caractérisé en ce qu'on traite mécaniquement les matériaux en vrac pendant un temps de séjour compris entre une minute à dix minutes.

3. Procédé selon la revendication 1 ou 2, caractérisé en ce que le matériau en vrac est un produit résiduel de carbonatation qui apparaît lors de la fabrication de sucre brut.

4. Procédé selon la revendication 3, caractérisé en ce que le traitement mécanique des produits résiduels de carbonatation est mis en oeuvre en aval d'un processus de filtration par au moins un filtre-presse à membrane et/ou à chambre.